(19) Europäisches Patentamt
European Patent Office
Office européen des brevets

(11) Publication number: 0 473 077 A1

(12) **EUROPEAN PATENT APPLICATION**

(21) Application number: **91114169.5**

(51) Int. Cl.$^5$: **C08K 5/00**, C08L 27/12

(22) Date of filing: **23.08.91**

(30) Priority: **24.08.90 JP 224013/90**

(43) Date of publication of application:
**04.03.92 Bulletin 92/10**

(84) Designated Contracting States:
**DE FR GB IT**

(71) Applicant: **DAIKIN INDUSTRIES, LIMITED**
**Umeda Center Building 4-12 Nakazaki-nishi 2-chome Kita-ku**
**Osaka 530(JP)**

(72) Inventor: **Tanaka, Hiroyuki, c/o Yodogawa Works**
**Daikin Ind.Ltd., 1-1, Nishihitotsuya**
**Settsu-shi, Osaka-fu(JP)**
Inventor: **Tomoda, Masayasu, c/o Yodogawa Works**
**Daikin Ind.Ltd., 1-1, Nishihitotsuya**
**Settsu-shi, Osaka-fu(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

(54) **Fluoroelastomer composition.**

(57) A fluoroelastomer composition containing 100 parts by weight of a fluoroelastomer and 0.02 to 5 % by weight of a compound of the formula:

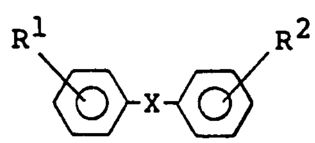

(I)

wherein $R^1$ and $R^2$ are the same or different and each a $C_2$-$C_{12}$ alkyl group, and X is a single bond, a $C_1$-$C_3$ alkylene group, -CO-, -NH-, $-SO_2-$, -S- or -O-, which has decreased sticking properties.

EP 0 473 077 A1

## BACKGROUND OF THE INVENTION

### Field of the Invention

The present invention relates to a fluoroelastomer composition having decreased sticking. More particularly, the present invention relates to a fluoroelastomer composition having good molding processability, in particular a low self-sticking property.

### Description of the Related Art

Different from hydrocarbon elastomers, rubbery elastomeric materials of fluoroelastomers, namely elastomers having a fluorine atom have self-sticking properties. When the fluoroelastomer composition is crosslinked and press molded, sticking occurs between molded articles or between a molded article and a burr, and it is often very difficult to separate the sticked molded article so that the article tends to be damaged according to a shape of the article. In particular, when the press molded article is transferred to a secondary vulcanization step after removal of burrs, special attention should be paid. This is because if the molded article is secondary vulcanized with the burrs being sticking with the article, the burrs are completely adhered to the article so that molding defect arises. Hitherto, there is not technique for solving such problems, though a technique for improving mold releasability is available.

## SUMMARY OF THE INVENTION

One object of the present invention is to prevent sticking of molded articles of a fluoroelastomer or of burrs to a molded article of a fluoroelastomer just after press molding or in a deburring step.

Another object of the present invention is to provide a fluoroelastomer composition having a less self-sticking property.

According to the present invention, there is provided a fluoroelastomer composition comprising 100 parts by weight of a fluoroelastomer and 0.02 to 5 % by weight of a compound of the formula:

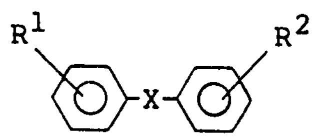

(I)

wherein $R^1$ and $R^2$ are the same or different and each a $C_2$-$C_{12}$ alkyl group, and X is a single bond, a $C_1$-$C_3$ alkylene group, -CO-, -NH-, $-SO_2$, -S- or -O-.

## DETAILED DESCRIPTION OF THE INVENTION

The fluoroelastomer composition of the present invention contains the compound (I) as an additive. The additive is not well compatible with the fluoroelastomer and is bled onto a surface of a molded article during or just after press molding (primary vulcanization) or in the deburring step. Preferably, it is evaporated in the secondary vulcanization.

A bleeding rate of the compound is greatly influenced by the carbon numbers in $R^1$ and $R^2$ but less influenced by the kind of the X group. When the compound has a melting point of 200°C or higher according to a combination of $R^1$, $R^2$ and X, the effect of the compound is adversely affected.

An amount of the compound (I) is from 0.02 to 5 parts by weight, preferably from 0.4 to 3 parts by weight per 100 parts by weight of the fluoroelastomer. When the amount of the compound (I) is less than 0.02 parts by weight, the sticking property is not decreased. When it is larger than 5 parts by weight, properties of the molded article such as compression set may be adversely affected.

Among the compound (I), a compound of the formula:

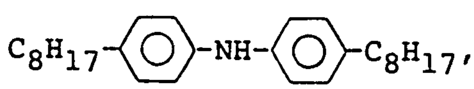,

namely dioctyldiphenylamine is preferred in view of its influence on the properties of the vulcanized rubber,

easy availability and economy.

As the fluoroelastomer, any elastomer having a fluorine atom may be used, since it has the sticking property. Specific examples of the fluoroelastomer are vinylidene fluoride (VdF)/hexafluoropropylene (HFP) copolymers, VdF/tetrafluoroethylene (TFE)/HFP copolymers, TFE/propylene (Pr) copolymers, TFE/VdF/Pr copolymers, TFE/fluorovinyl ether (FVE) copolymers, VdF/FVE copolymers, VdF/TFE/FVE copolymers, fluorosilicone elastomers, fluorophosphazene rubbers, and the like. A fluoroelastomer may contain a bromine atom and/or an iodine atom in a molecule.

The fluoroelastomer composition of the present invention may contain one or more other components. A peroxide crosslinking composition contains a conventional peroxide and a conventional polyfunctional compound. A polyol crosslinking composition contains a conventional polyhydroxy compound, an acid acceptor and a crosslinking accelerator. An amine crosslinking composition contains a conventional polyamine.

The fluoroelastomer composition of the present invention may further contain conventional additives such as carbon black, silica, pigments, etc.

## PREFERRED EMBODIMENTS OF THE INVENTION

The present invention will be illustrated by following Examples.

### Example 1

A fluoroelastomer composition having a formulation shown in Table 1 was prepared. In Table 1, the "fluoroelastomer" is a copolymer of vinylidene fluoride and hexafluoropropylene (a molar ratio of 78:22), and "DBU-B" stands for 8-benzyl-1,8-diazabicyclo[5.4.0]undecenium chloride.

With the composition, vulcanizability, tensile strength at break ($T_B$), elongation at break ($E_B$), hardness (Hs), compression set (CS) and sticking strength were measured and evaluated.

As the additive, dioctyldiphenylamine (0.1 part by weight) was used.

The sticking strength is evaluated as follows:

A sheet of 7 cm in length, 2.5 cm in width and 2 mm in thickness is molded by press molding at 170 °C for 10 minutes and immediately a pair of sheets are laminated with an overlapping length of 2.5 cm and kept standing at room temperature for 24 hours under a load of 100 g. Then, the sheets are peeled off by a tensile tester at a pulling rate of 50 mm/min. to measure the strength.

### Examples 2 to 5

In the same manner as in Example 1 but changing an amount of the additive to 0.5 part by weight (Example 2), 1.0 part by weight (Example 3) or 2.0 parts by weight (Example 4), a sheet was produced and the tests were carried out.

The results are shown in Table 1.

### Comparative Example 1

In the same manner as in Example 1 but using no additive, a sheet was produced and the tests were carried out. The results are shown in Table 1.

Table 1

| Example No. | C. 1 | 1 | 2 | 3 | 4 |
|---|---|---|---|---|---|
| Composition (wt. parts) | | | | | |
| Fluoroelastomer | 100 | 100 | 100 | 100 | 100 |
| Bisphenol-AF | 1.5 | 1.5 | 1.5 | 1.5 | 1.5 |
| DBU-B | 0.3 | 0.3 | 0.3 | 0.3 | 0.3 |
| MT carbon black | 20 | 20 | 20 | 20 | 20 |
| Magnesium oxide | 3 | 3 | 3 | 3 | 3 |
| Calcium hydroxide | 6 | 6 | 6 | 6 | 6 |
| Additive | 0 | 0.1 | 0.5 | 1.0 | 2.0 |
| Vulcanizability | | | | | |
| $M_L$ (kg.f) | 0.30 | 0.30 | 0.30 | 0.30 | 0.30 |
| $M_H$ (kg.f) | 3.890 | 3.80 | 3.80 | 3.80 | 3.75 |
| $T_{10}$ (min.) | 2.0 | 2.0 | 2.0 | 2.0 | 2.1 |
| $T_{90}$ (min.) | 3.0 | 3.0 | 3.0 | 3.1 | 3.2 |
| Vulcanization conditions | | | | | |
| Press vulcanization | 170°C x 10 minutes | | | | |
| Oven vulcanization | 230°C x 24 hours | | | | |
| Original properties | | | | | |
| $T_B$ (kg.f/cm$^2$) | 160 | 160 | 160 | 155 | 154 |
| $E_B$ (%) | 270 | 270 | 280 | 280 | 270 |
| Hs (JIS-A) | 70 | 70 | 70 | 70 | 70 |
| CS (P-24 O-ring) (%) (200°C x 70 hours) | 20 | 20 | 21 | 24 | 27 |
| Sticking strength (kg.f) | 6.0 | 5.0 | 2.7 | 2.5 | 2.0 |

Comparative Examples 2 to 6

In the same manner as in Example 3 but using 1.0 parts by weight of the following compound in place of dioctyldiphenylamine, a sheet was prepared and the sticking strength was measured. The results are shown in Table 2.

Compound A (Comparative Example 2)

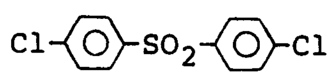

(dichlorodiphenylsulfone)

Compound B (Comparative Example 3)

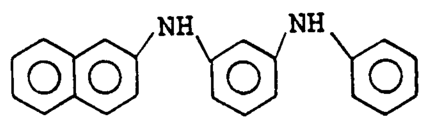

Compound C (Comparative Example 4)

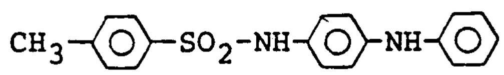

Compound D (Comparative Example 5)

Low molecular weight polyethylene

Compound E (Comparative Example 5)

Carnauba wax

Table 2

| Comparative Example No. | 2 | 3 | 4 | 5 | 6 |
|---|---|---|---|---|---|
| Composition (wt. parts) | | | | | |
| Fluoroelastomer | 100 | 100 | 100 | 100 | 100 |
| Bisphenol-AF | 1.5 | 1.5 | 1.5 | 1.5 | 1.5 |
| DBU-B | 0.3 | 0.3 | 0.3 | 0.3 | 0.3 |
| MT carbon black | 20 | 20 | 20 | 20 | 20 |
| Magnesium oxide | 3 | 3 | 3 | 3 | 3 |
| Calcium hydroxide | 6 | 6 | 6 | 6 | 6 |
| Additive Compound | A | B | C | D | E |
| Sticking strength (kg.f) | 5.0 | 5.0 | 6.1 | 5.8 | 5.7 |

**Claims**

**1.** A fluoroelastomer composition comprising 100 parts by weight of a fluoroelastomer and 0.02 to 5 % by weight of a compound of the formula:

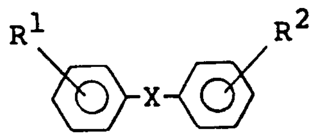

(I)

wherein $R^1$ and $R^2$ are the same or different and each a $C_2$-$C_{12}$ alkyl group, and X is a single bond, a $C_1$-$C_3$ alkylene group, -CO-, -NH-, $-SO_2-$, -S- or -O-.

**2.** The fluoroelastomer composition according to claim 1, wherein an amount of said compound (I) is from 0.4 to 3 parts by weight.

**3.** The fluoroelastomer composition according to claim 1, wherein said compound (I) is dioctyldiphenylamine.

**4.** The fluoroelastomer composition according to claim 1, wherein said fluoroelastomer is at least one selected from the group consisting of vinylidene fluoride/hexafluoropropylene copolymers, vinylidene fluoride/tetrafluoroethylene/hexafluoropropylene copolymers, tetrafluoroethylene/propylene copolymers, tetrafluoroethylene/vinylidene fluoride/propylene copolymers, tetrafluoroethylene/fluorovinyl ether copolymers, vinylidene fluoride/fluorovinyl ether copolymers, vinylidene fluoride/tetrafluoroethylene/fluorovinyl ether copolymers, fluorosilicone elastomers and fluorophosphazene rubbers.

European Patent Office

# EUROPEAN SEARCH REPORT

Application Number

EP 91114169.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | ENCYCLOPEDIA OF CHEMICAL TECHNOLOGY, vol. 20, ed. 3, 1982, JOHN WILEY & SONS, New York KIRK-OTHMER "Encyclopedia of Chemical Technology" page 371 -- | 1,3 | C 08 K 5/00<br>C 08 L 27/12 |
| A | EP - A - 0 090 427 (UNION CARBIDE CORPORATION) * Page 3, paragraphs 3-5 * -- | 1,3 | |
| A | GB - A - 2 178 043 (TOKUYAMA SODA) * Page 2, line 36 - page 3, line 7; claims * ---- | 1 | |

TECHNICAL FIELDS SEARCHED (Int. Cl.5)

C 08 K
C 08 L 27/00
C 08 L 101/00

The present search report has been drawn up for all claims

| Place of search | Date of completion of the search | Examiner |
|---|---|---|
| VIENNA | 06-12-1991 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document